# EUROPÄISCHE PATENTANMELDUNG

(11) **EP 1 881 044 A2**
(43) Veröffentlichungstag der Anmeldung: **23.01.2008**
(21) Anmeldenummer: 07111238.7
(22) Anmeldetag: 28.06.2007
(51) Int. Cl.: C09J 7/02, C08J 5/18

(54) **Monoaxial verstreckte Polypropylenfolie mit hohem Weiterreißwiderstand in Querrichtung**

(30) Priorität: 21.07.2006 DE 102006044041
(71) Anmelder: tesa AG, 20253 Hamburg (DE)
(72) Erfinder: Rodewald, Ilse, 22527, Hamburg (DE); Müssig, Dr. Bernhard, 21218, Seevetal (DE); Michel, Uwe, 22527, Hamburg (DE)

(57) **Zusammenfassung**

Trägerfolie, die mindestens ein Polypropylen enthält, monoaxial in Längsrichtung verstreckt ist, dadurch gekennzeichnet, dass in der Trägerfolie mindestens ein Nukleierungsmittel homogen verteilt ist.

## Beschreibung

Die Erfindung betrifft eine Trägerfolie aus Polypropylen, Verfahren zur Herstellung derselben sowie die Verwendung dieser in einem Klebeband.

Folien mit hoher Längsfestigkeit erreicht man üblicherweise durch Verstrecken von extrudierten Flachfolien aus teilkristallinen Thermoplasten. Dabei handelt es sich überwiegend um eine biaxiale Verstreckung, im Ausnahmefall sind die Folien zur weiteren Erhöhung der Längszugfestigkeit nur in Längsrichtung orientiert. Sowohl marktübliche biaxial als auch monoaxial verstreckte Folien auf Basis von Polypropylen weisen aber im Gegensatz zu unverstreckten Folien aus dem Blas- oder Cast-Verfahren geringe Weiterreißfestigkeiten in Querrichtung auf. In der Praxis führen verletzte Kanten von der Folie beziehungsweise dem Klebeband (bedingt durch stumpfe Messer beim Schneiden oder späterer unbeabsichtigter Verletzung der Schnittkante) leicht zum Einbeziehungsweise Abreißen unter Zugbelastung.

Bei hohen Anforderungen an Zug- und Weiterreißfestigkeit werden Folien beziehungsweise Klebebänder mit Filamenten oder Netzen aus Filamenten aus Glas oder Kunststoff verstärkt. Die Herstellung solcher Filamentklebebänder ist anlagenseitig sehr aufwändig und damit teuer und störanfällig. Neben der Basisfolie werden zusätzlich noch die Filamente und Laminierkleber (beziehungsweise eine zusätzliche Haftkleberbeschichtung) benötigt, welches die Produkte weiter verteuert. Weitere Nachteile solcher Filamentklebebänder sind geringe Knickbruchbeständigkeit, hohe Dicke, unsaubere Schneidkanten und fehlende Durchschweissbarkeit sowie fehlende Recyclingfähigkeit. Die Herstellung wird zum Beispiel in der US 4,454,192 A beschrieben.

Die DE 21 04 817 A1 beschreibt ein Verfahren zur Herstellung eines Klebebandträgers aus Polyolefin (Polyethylen oder Polyethylen). Durch Reckung in Längsrichtung soll eine Zugfestigkeit in Längsrichtung von 320 N/mm² erreicht werden können (gemäß einer bevorzugten Ausführungsform). Reckverhältnis und erreichte Spannung bei 10 % Dehnung werden nicht offenbart.

Gegenstand der EP 0 255 866 A1 ist eine in Längsrichtung oder eine biaxial gereckte Polypropylenfolie aus einem Polypropylenhomopolymer oder einem Polypropylencopolymer. Der Zusatz von elastomeren Komponenten erhöht die Schlagzugzähigkeit in Querrichtung. Diese Maßnahme führt allerdings zu einer Verschlechterung der Zugfestigkeit und der Weiterreißfestigkeit in Querrichtung, da dadurch bei Belastung der Folie in Querrichtung die Ausbildung von faserartigen Strukturen unterbunden wird. Das Reckverhältnis in Längsrichtung beträgt 1:5,5 bis 1:7. Es werden Zugfestigkeiten von 12 bis 355 N/mm² erreicht. Werte für die Spannungen bei 10 % Dehnung sind nicht bekannt.

In der DE 36 40 861 A1 wird ein Aufreißstreifen mit verringerter Abreißneigung durch Verwendung einer in Längsrichtung verstreckten Folie beschrieben, welche durch Coextrusion von Rohstoffen unterschiedlicher Zähigkeit hergestellt ist. Die zähe Coextrusionsschicht verringert die Bildung von Mikrorissen beim Schneiden des Produktes und verbessert dadurch die Seiteneinreißfestigkeit. Sie vermeidet jedoch nicht das Abreißen an nachträglich verletzten Kanten. Die angegeben Rohstoffe als Hauptkomponente der Coextrusionsschicht dienen zur Erhöhung der Zähigkeit dieser Schicht, führen aber auch zu einer deutlich verringertem Zugfestigkeit der Folien in Längsrichtung. Die in den Beispielen beschriebenen Folien weisen umgerechnet eine Zugfestigkeit von nur 215 N/mm² auf. Hierfür ist die Rezepturkombination von PP-Blockcopolymer mit maximal 20 % Ethylen und Schlagzähmodifikator verantwortlich. Als Schlagzähmodifikator werden LLDPE, EVA und SBS-Kautschuk erwähnt. Sie sind in den beiden Schichten in unterschiedlichen Verhältnissen kombiniert, um eine hochzähe und eine noch relativ feste Schicht zu erreichen. Der Streifen weist keine hohe Weiterreißfestigkeit in Querrichtung auf. Das Reckverhältnis liegt bei 1:7,5. Die Spannungen bei 10 % Dehnung liegen bei 84 bis 103 N/mm² und die Zugfestigkeiten im Bereich von 196 bis 214 N/mm².

Die DE 44 02 444 A1 betrifft ein reißfestes Klebeband auf der Basis von monoaxial orientiertem Polyethylen. Es können in mancher Hinsicht ähnliche mechanische Eigenschaften wie bei entsprechenden Polypropylenprodukten erreicht werden. Polyethylen weist jedoch eine bedeutend geringere Wärmebeständigkeit als PP auf, die sich sowohl bei der Herstellung des Klebebandes (Trocknung von Klebstoff- oder anderen Schichten im Ofen) nachteilig auswirken kann als auch bei den späteren Verpackungsanwendungen als Griffband, Kartonverschlussklebeband, Aufreißstreifen oder Kartonverstärkungsstreifen. Die Klebebänder auf den Kartons werden oft heiß zum Beispiel beim Durchgang durch Druckmaschinen oder nach der Befüllung mit heißen Gütern (zum Beispiel Lebensmitteln). Ein weiterer Nachteil von (auch verstreckten) Polyethylenfolien ist im Vergleich zu Polypropylenfolien die deutlich geringere Kraft bei 10 % Dehnung, wie es dem Fachmann bekannt ist und wie es auch an den zitierten kommerziell erhältlichen Folien überprüft wurde. Durch die höhere Dehnung bei gegebener Kraft neigen daraus hergestellte Griffbänder oder Kartonverschlussklebebänder zur Ablösung unter Zugbelastung und können das Einreißen von Kartons nicht verhindern. Das Reckverhältnis in Längsrichtung und Spannungen bei 10 % Dehnung werden nicht offengelegt. Es werden Zugfestigkeiten von 102 bis 377 N/mm² erreicht.

Die vorbeschriebenen Produkte haben durchaus Anwendungen gefunden, können aber die Zugfestigkeiten und Weiterreißfestigkeiten nicht von Filamentklebebändern annähernd erreichen. Infolgedessen hat es Bemühungen gegeben, das aufwändige Aufbringen vieler Filamentfäden zu vermeiden und den verstreckten Folien durch Längsstrukturen filamentartige Eigenschaften zu geben, welche nachfolgend beschrieben sind.

Die US 5,145,544 A und die US 5,173,141 A beschreiben ein Klebeband aus einer monoaxial verstreckten Folie, welche eine Rippenstruktur zur Verstärkung aufweist, wobei die Rippen zum Teil aus der Oberfläche herausragen, zum Teil in die Folienoberfläche eingebettet sind und zwischen Folie und Rippen Kerbfugen ausgebildet sind. Die Folie erreicht hohe Seiteneinreißfestigkeit, die Zugfestigkeit und Dehnbarkeit hingegen sind noch verbesserungswürdig. Der wesentliche Mangel besteht jedoch darin, dass eine derartige Folie nicht im Produktionsmaßstab herstellbar ist. Die Ursachen dafür sind die schlechte Verstreckbarkeit in üblicher Breite sowie eine extrem schlechte Planlage, so dass die Beschichtbarkeit mit Haftkleber nicht mehr gewährleistet ist. Bei hohen Breiten verschlechtert sich zudem die Planlage auch noch durch ungleichmäßige und unzureichende Haftung (bedingt durch die nicht plan aufliegende Folie) auf den Reckwalzen im nachfolgenden Verstreckungsprozess. Bei einer Herstellung in produktionsüblicher Breite wird die Folie im mittleren Bereich auf den Reckwalzen in Querrichtung gehalten, wodurch sich die Rippenstruktur durch Verstrecken verändert und die gesamte Produktqualität inhomogen wird. Ein weiterer Nachteil ist die Notwendigkeit einer mindestens 50%igen Einbettung der Rippen durch einen Kalander, welcher in der Investition sehr teuer ist und den Prozess viel aufwändiger macht. Die Rippenstruktur an der Oberfläche führt auch leicht zu Beschichtungsfehlern beim Auftragen von Releasemitteln oder Primern bei der Weiterverarbeitung zu Klebebändern, da die Auftragsverfahren für Folien eine glatte Oberfläche erfordern. Abdrücke von Verstärkungsfilamenten oder Rippenstrukturen in der Oberfläche von Folien sind für die Bedruckung nachteilig, die glatte Oberflächen voraussetzt. Insbesondere bei einer Nutzung der Folie für ein Verpackungsklebeband ist die Bedruckbarkeit für den Kunden ein wichtiges Kriterium. Der US 5,145,544 A können ein Reckverhältnis 1:7 und Zugfestigkeiten von 157 bis 177 N/mm² entnommen werden, Spannungen bei 10 % Dehnung werden nicht ermittelt. Der US 5,173,141 A können Reckverhältnisse von 1:6,1 bis 1:7 und Zugfestigkeiten bis zu 245 N/mm² entnommen werden, Spannungen bei 10 % Dehnung werden nicht ermittelt.

Die EP 1 101 808 A1 versucht, die genannten Nachteile zu beseitigen, indem die Rippenstrukturen in das Innere der Folie verlegt wurden. Die Folie weist planparallelen Außenseiten auf und enthält mindestens zwei coextrudierte Schichten unterschiedlicher Zusammensetzung, deren Grenzfläche nicht eben ist, sondern im Querschnitt einen nicht geraden Grenzverlauf aufweist, der sich in Längsrichtung laminar fortsetzt. Die besondere innere Struktur der Folie beruht darauf, dass die Dicke einer Schicht in Querrichtung periodisch oder unregelmäßig variiert und die zweite Schicht die Dickenschwankungen derart kompensiert, dass die Gesamtdicke im Wesentlichen konstant ist.
Alle genannten Folien weisen gegenüber einer normalen Klebebandfolie eine verbesserte Zugfestigkeit und ein verbessertes E-Modul in Längsrichtung auf. Die Reckverhältnisse liegen zwischen 1:6,7 und 1:8,7. An Zugfestigkeiten werden 202 bis 231 N/mm² und an Spannungen bei 10 % Dehnung 103 bis 147 N/mm² erreicht.

Die EP 0 353 907 A1 wendet die Idee des Fibrillierens von Folien an. Dabei wird ein Klebeband, welches aus einer Trägerschicht, die mit einer weiteren Schicht einer fibrillierten Polymerfolie verklebt wird, hergestellt. Anschließend wird die fibrillierte Seite mit Klebemasse beschichtet. Die zu fibrillierende Polymerfolie wird vorzugsweise extrudiert, besteht aus PP und wird anschließend in Maschinenrichtung monoaxial gereckt. Dieses ebenfalls sehr aufwändige Verfahren hat den Nachteil, dass das Laminat in vier Prozessschritten (Extrudieren, Reckung, Fibrillieren und Verklebung der Fibrillen auf der BOPP-Trägerfolie) hergestellt werden muss.
Die Dicke der Folien der EP 0 353 907 A1 liegt bei ca. 25 µm (BOPP) und ca. 5 µm (verstreckte PP-Folie). Daher können nur Reißfestigkeiten von 99 bis 176 N/cm und Weiterreißfestigkeiten von 15 bis 22 N/cm bei erreicht werden.

Alle diese Folien werden nicht großtechnisch umgesetzt, da die Herstellverfahren sehr aufwändig sind. Auf der anderen Seite können sie die Eigenschaften von Produkten mit Glas- oder Polyesterfilamenten bei weitem nicht erreichen.

Aufgabe der Erfindung ist es, eine Trägerfolie zur Verfügung zu stellen, die die geschilderten Nachteile des Standes der Technik nicht oder nicht in dem Maße zeigt. Insbesondere soll diese eine hohe Weiterreißfestigkeit in Querrichtung aufweisen sowie transparent sein.

Gelöst wird diese Aufgabe durch eine Trägerfolie, wie sie in dem Hauptanspruch niedergelegt ist. Gegenstand der Unteransprüche sind dabei vorteilhafte Weiterbildungen der Trägerfolie, Verfahren zur Herstellung derselben sowie Verwendungsmöglichkeiten.

Demgemäß betrifft die Erfindung eine Trägerfolie, die mindestens ein Polypropylen enthält und die monoaxial in Längsrichtung verstreckt ist. Erfindungswesentlich ist, dass in der Trägerfolie mindestens ein Nukleierungsmittel homogen verteilt ist.

Die Folie hat aufgrund der erfindungsgemäßen Kombination eines in der Folie homogen verteilten Nukleierungsmittels mit einer monoaxialen Verstreckung ein glasklares Aussehen und ist, soweit keine zusätzlichen Pigmente oder Farbstoffe zugegeben werden, farblos. Die Folienoberfläche ist vorzugsweise hochglänzend.

Nukleierungsmittel sind Keimbildner (Salze organischer Säuren, zum Beispiel Natriumbenzoat), die kristallisierbaren Thermoplasten, speziell Polyolefinen, Polyester, Polyamiden etc. zugesetzt werden, damit die Kristallisation beschleunigt wird. Durch die Veränderung des Kristallisationsprozesses entstehen Produkte mit verändertem physikalischem Eigenschaftsbild.

Unter homogener Verteilung ist die Verteilung in einer Schicht gemeint. Die Trägerfolie kann durchaus mehrere Schichten aufweisen, die hinsichtlich der jeweiligen Konzentration des Nukleierungsmittel in sich homogen sind. Die Schichten dürfen aber durchaus unterschiedliche Konzentration an Nukleierungsmittel aufweisen.

In einer vorteilhaften Ausführungsform der Erfindung weist die Trägerfolie eine Trübung von höchstens 30 %, bevorzugt höchstens 15 % und/oder einen Glanz von mindestens 70 %, bevorzugt von mindestens 120 % auf. Die Prüfmethoden zur Bestimmung dieser Werte werden unten erläutert.

Zur Erzielung hoher Zugfestigkeiten, hohen Spannungen bei 1 % und 10 % Dehnung und hoher Weiterreißfestigkeit werden die Reckprozessbedingungen vorzugsweise so gewählt, dass das Reckverhältnis das für die Primärfolie jeweils maximal technisch durchführbare ist. Bei dieser Erfindung liegt gemäß einer weiteren vorteilhaften Ausführungsform das Reckverhältnis bei mindestens 1:8, vorzugsweise bei mindestens 1:9,5 in Längsrichtung.
Das Reckverhältnis gibt an, dass bei einem Reckverhältnis von 1:8 aus einem Abschnitt der Folie von zum Beispiel 1 m Länge ein Abschnitt von 8 m Länge der gereckten Folie entsteht. Oft wird das Reckverhältnis auch als Quotient der Liniengeschwindigkeit zur Reckwalzengeschwindigkeit definiert.

In einer weiteren bevorzugten Ausführung besitzt die Trägerfolie in Maschinenrichtung eine Spannung bei 1 % Dehnung von mindestens 20, vorzugsweise mindestens 40 N/mm² und/oder eine Spannung bei 10 % Dehnung von mindestens 250, vorzugsweise mindestens 300 N/mm².
Die Zugfestigkeit beträgt weiter bevorzugt mindestens 300, besonders bevorzugt mindestens 350 N/mm².
Die Weiterreißfestigkeit in Querrichtung bezogen auf die Foliendicke erreicht vorzugsweise mindestens 450 N/mm².
Zur Berechnung von Festigkeitswerten werden die breitenbezogenen Kraftwerte durch die Dicke geteilt. Im Fall einer Bestimmung an einem mit der Trägerfolie hergestellten Klebeband soll als Dicke nicht die Gesamtdicke, sondern nur die der Trägerfolie zugrunde gelegt werden.

Die Dicke der Trägerfolie liegt vorzugsweise zwischen 25 und 200, besonders bevorzugt zwischen 40 und 140, ganz besonders bevorzugt zwischen 50 und 90 µm.

Geeignete Folienrohstoffe gemäß dieser Erfindung sind kommerziell erhältliche Polypropylenhomopolymere oder Polypropylencopolymere. Die Schmelzindizes der oben genannten Polymere sollten im für Flachfolienextrusion geeigneten Bereich liegen. Dieser Bereich liegt gemäß einer bevorzugten Ausführungsform zwischen 0,3 und 15 g/10min, vorzugsweise im Bereich von 0,8 und 5 g/10min (gemessen bei 230 °C/2,16kg).
Der Biegemodul beträgt gemäß einer weiteren vorteilhaften Ausführungsform mindestens 1000, vorzugsweise mindestens 1500, weiter vorzugsweise mindestens 2000 MPa.

Das Polypropylen ist vorzugsweise überwiegend isotaktisch aufgebaut.

Die Polymere zur Bildung der Trägerfolie können in Reinform oder in Blends mit Additiven wie Antioxidantien, Lichtschutzmitteln, Antiblockmitteln, Gleit- und Verarbeitungshilfsmitteln, Füllstoffen, Farbstoffen oder Pigmenten vorliegen. Der Zusatz sollte vermieden oder auf das notwendigste Maß reduziert werden, um die optischen Eigenschaften nicht (wesentlich) zu verschlechtern.

Das hochtransparente beziehungsweise hochglänzende Aussehen wird wie beschrieben durch den Zusatz von mindestens einem Nukleierungsmittel erreicht.
Prinzipiell sind alle für Polypropylen geeigneten Nukleierungsmittel einsetzbar. Besonders geeignet sind Nukleierungsmittel, die α- oder β-Kristalle erzeugen.

Vorzugsweise werden organische Nukleierungsmittel wie zum Beispiel Benzoate, Phosphate oder Sorbitolderivate eingesetzt.
Derartige Nukleierungsmittel werden zum Beispiel im Kapitel "9.1. Nukleating Agents" in Ullmann's Encyclopedia of Industrial Chemistry (Auflage 2002 vom Wiley-VCH Verlag, Article Online Posting Date June 15, 2000) oder in den Beispielen der US 2003195300 A1 (US 6,927,256 B) beschrieben. Eine weitere geeignete Maßnahme besteht in der Verwendung eines semikristallinen verzweigten oder gekuppelten polymeren Nukleierungsmittel, wie es in der US 2003195300 A1 beschrieben ist, zum Beispiel ein mit 4,4'-Oxydibenzolsulfonylazid modifiziertes Polypropylen.

Das Nukleierungsmittel kann in Reinform oder als Masterbatch eingesetzt werden.

Der bevorzugte Prozess zur Herstellung der Trägerfolie beziehungsweise eines Klebebandes, das die erfindungsgemäße Trägerfolie verwendet, beinhaltet folgende Schritte:
- Polymere und Additive werden gemischt und in einem Extruder einer Flachfoliendüse zugeführt, wobei der Extruder das Nukleierungsmittel homogen mit dem Polypropylen vermischt.
- Der Schmelzefilm wird dann auf einer so genannten "Chillroll" kontrolliert abgekühlt.
- Bevor die Folie dem Reckwerk zugeführt wird, wird sie über temperierte Walzen auf eine geeignete Recktemperatur aufgeheizt.
- Die Folie wird im Kurzspalt in Maschinenrichtung orientiert.
- Die Trägerfolie wird gegebenenfalls durch Beschichtung oder Coextrusion mit einer Klebemasse versehen.

Der Herstellungsprozess ist sicherer beherrschbar, wenn für die Trägerherstellung ein Compound aus Nukleierungsmittel und Polypropylen vom Polymerhersteller verwendet wird. Bevorzugt wird der Einsatz eines vom Polymerhersteller fertig nukleierten Polypropylens.

Wenn das Nukleierungsmittel erst bei der Folienextrusion dem Polypropylen zugefügt wird, enthält die Schnecke des Extruders vorzugsweise hinreichend viele beziehungsweise hinreichend intensiv wirkende Mischelemente, da sonst das Nukleierungsmittel zu inhomogen verteilt werden könnte.

Die Folie kann ein- oder mehrschichtig hergestellt worden sein, vorzugsweise ist sie einschichtig. Die Folien können durch Kaschierung, Prägung oder Strahlenbehandlung modifiziert sein.

Die unverstreckte Primärfolie mit den Nukleierungsmitteln hat kein glasklares Aussehen. Erst durch die Verstreckung in Längsrichtung entsteht dieses.

Durch den Zusatz von transluzenten Pigmenten oder vorzugsweise Farbstoffen bei der Folienherstellung oder durch farbige Beschichtung der Folie können auch glänzende hochtransparent farbige Folien beziehungsweise daraus Klebebänder erzeugt werden. Die Transparenz von Folien kann durch schnelle Abkühlung verbessert werden. Chillrolltemperaturen von ca. 20 °C ergeben aus Polyproylenhomopolymer transparente unverstreckte Folien. In vorliegender Erfindung wurde festgestellt, dass sogar Chillroll-Temperaturen von 30 bis 60 °C geeignet sind, hochtransparente Folien zu erzeugen, da sich herausstellte, dass die hohe Transparenz wesentlich durch den Reckungsprozess hervorgerufen wird.

Die Folien können mit Oberflächenbehandlungen versehen sein. Dies sind zum Beispiel zur Haftvermittlung Corona-, Flamm-, Fluor- oder Plasmabehandlung oder Beschichtungen von Lösungen, von Dispersionen oder von flüssigen strahlenhärtbaren Materialien. Weitere mögliche Beschichtungen sind Bedruckungen und Antihaftbeschichtungen, zum Beispiel solche aus vernetzten Silikonen, Acrylaten (zum Beispiel Primal ® 205), Polymeren mit Vinylidenchlorid oder Vinylchlorid als Monomer oder Stearylverbindungen wie Polyvinylstearylcarbamat der Chromstearatomplexen (zum Beispiel Quilon ® C) oder Umsetzungsprodukten aus Maleinsäureanhydridcopolymeren und Stearylamin.

Bevorzugt wird die Trägerfolie ein- oder beidseitig mit einer Klebemasse ausgerüstet, vorzugsweise mit einer selbstklebenden oder einer hitzeaktivierbaren Klebstoffschicht.

Der allgemeine Ausdruck "Klebeband" umfasst im Sinne dieser Erfindung alle flächigen Gebilde wie in zwei Dimensionen ausgedehnte Folien oder Folienabschnitte, Bänder mit ausgedehnter Länge und begrenzter Breite, Bandabschnitte, Stanzlinge, Etiketten und dergleichen.

Vorzugsweise handelt es sich bei der Klebemasse um Haftkleber.
Die Folie wird für die Klebebandanwendung ein- oder beidseitig mit dem bevorzugten Haftkleber als Lösung oder Dispersion oder 100 %ig (zum Beispiel Schmelze) oder durch Coextrusion mit der Folie beschichtet. Die Klebeschicht(en) können durch Wärme oder energiereiche Strahlen vernetzt und erforderlichenfalls mit Trennfolie oder Trennpapier abgedeckt werden. Geeignete Haftkleber sind bei D. Satas, Handbook of Pressure Sensitive Adhesive Technology (Van Nostrand Reinhold) beschrieben. Insbesondere sind Haftkleber auf Basis Acrylat, Naturkautschuk, thermoplastischem Styrolblockcopolymer oder Silicon geeignet.

Zur Optimierung der Eigenschaften kann bevorzugt die zum Einsatz kommende Selbstklebemasse mit einem oder mehreren Additiven wie Klebrigmachern (Harzen), Weichmachern, Füllstoffen, Pigmenten, UV-Absorbern, Lichtschutz-, Alterungsschutzmitteln, Vernetzungsmitteln, Vernetzungspromotoren oder Elastomeren abgemischt sein.

Geeignete Elastomere zum Abmischen sind zum Beispiel EPDM- oder EPM-Kautschuk, Polyisobutylen, Butylkautschuk, Ethylen-Vinylacetat, hydrierte Blockcopolymere aus Dienen (zum Beispiel durch Hydrierung von SBR, cSBR, BAN, NBR, SBS, SIS oder IR, solche Polymere sind zum Beispiel als SEPS und SEBS bekannt) oder Acrylatcopolymere wie ACM.

Klebrigmacher sind beispielsweise Kohlenwasserstoffharze (zum Beispiel aus ungesättigten C₅- oder C₇-Monomeren), Terpenphenolharze, Terpenharze aus Rohstoffen wie α- oder β-Pinen, aromatische Harze wie Cumaron-Inden-Harze oder Harze aus Styrol oder α-Methylstyrol wie Kolophonium und seine Folgeprodukte wie disproportionierte, dimerisierte oder veresterte Harze, wobei Glycole, Glycerin oder Pentaerythrit eingesetzt werden können, sowie weitere, wie sie in Ullmanns Enzyklopädie der technischen Chemie, Band 12, Seiten 525 bis 555 (4. Auflage), Weinheim, aufgeführt sind. Besonders geeignet sind alterungsstabile Harze ohne olefinische Doppelbindung wie zum Beispiel hydrierte Harze.

Füllstoffe und Pigmente wie Ruß, Titandioxid, Calciumcarbonat, Zinkcarbonat, Zinkoxid, Silicate oder Kieselsäure können verwendet werden, sollten aber wegen der mangelnden Transparenz vermieden werden.

Geeignete UV-Absorber, Lichtschutz- und Alterungsschutzmittel für die Klebemassen sind dieselben, wie sie für die Stabilisierung der Folie aufgeführt sind.

Geeignete Weichmacher sind beispielsweise aliphatische, cycloaliphatische und aromatische Mineralöle, Di- oder Poly-Ester der Phthalsäure, Trimellitsäure oder Adipinsäure, flüssige Kautschuke (zum Beispiel Nitril- oder Polyisoprenkautschuke), flüssige Polymerisate aus Buten und/oder Isobuten, Acrylsäureester, Polyvinylether, Flüssig- und Weichharze auf Basis der Rohstoffe zu Klebharze, Wollwachs und andere Wachse oder flüssige Silikone.

Vernetzungsmittel sind beispielsweise Phenolharze oder halogenierte Phenolharze, Melamin- und Formaldehydharze. Geeignete Vernetzungspromotoren sind zum Beispiel Maleinimide, Allylester wie Triallylcyanurat, mehrfunktionelle Ester der Acryl- und Methacryläure.

Gemäß einer bevorzugten Ausführungsform der Klebemasse besteht der Haftkleber aus hellen und transparenten Rohstoffen. Besonders bevorzugt sind Acrylathaftkleber (zum Beispiel als Dispersion) oder Haftkleber aus Styrolblockcoplymer und Harz (wie sie zum Beispiel für Schmelzhaftkleber üblich sind).

Die Beschichtungsstärke mit Klebemasse liegt vorzugsweise im Bereich von 18 bis 50, insbesondere 22 bis 29 g/m². Die Breite der Klebebandrollen liegt vorzugsweise im Bereich von 2 bis 60 mm.

Die erfindungsgemäße Trägerfolie ist insbesondere für hochwertig anmutende Verpackungsanwendungen geeignet. Nach dem Stand der Technik sind keine Klebebänder mit monoaxial in Längsrichtung verstreckter Trägerfolie aufgefunden worden, welche hochtransparent sind. Farblose monoaxial verstreckte Trägerfolien werden aus Polypropylenblockcopolymer hergestellt, welche eine Volumentrübigkeit und eine leicht matte Oberfläche aufweisen. Farblose monoaxial verstreckte Trägerfolien werden teilweise auch aus einer Mischung von Polypropylenblockcopolymer oder Polypropylenhomopolymer mit Polyethylen wie LLDPE oder SBS-Kautschuk hergestellt. Dem Fachmann ist geläufig, dass farblose Produkte aus Polypropylenblockcopolymer leicht matt und trübe sind, dieser Effekt ist bei Mischungen aus Polypropylenhomopolymer und einem weiteren Polyolefin noch stärker ausgeprägt.

In der Verpackungsindustrie sind unverstreckte und biaxial verstreckte Polypropylenfolien bekannt, welche eine hohe Transparenz aufweisen. Transparente biaxial verstreckte Folien werden seit langem für Verpackungsanwendungen und auch als Klebebandträger verwendet. Sie enthalten keine Nukleierungsmittel, sondern erhalten ihre Transparenz durch den Herstellprozess. Diese Folien weisen eine geringe Trübigkeit auf, da für ihre Herstellung Füllstoffe als Antiblockmittel eingesetzt werden müssen. Für Klebebänder mit hohen Anforderungen an Zugfestigkeit und Biegesteifigkeit sind diese biaxial verstreckten Folien nicht geeignet, da die Orientierung in Längsrichtung im Vergleich zu monoaxial verstreckten Folien gering ist. Hinzu kommt, dass biaxial verstreckte Folien in der Regel zwischen 15 und 35 µm angeboten werden. Ungeschäumte Folien mit Dicken bis zu 60 µm sind bekannt, aber nur schwer herstellbar. Monoaxial verstreckte Klebebandfolien werden üblicherweise im Dickenbereich von 40 bis 140 µm eingesetzt und haben daher auch von der Dicke her besonders hohe Festigkeiten.

Das Aussehen wird in vorliegender Erfindung vorzugsweise durch ein sehr homogen verteiltes Nukleierungsmittel erreicht. Antiblockmittel oder andere Füllstoffe werden im Gegensatz zu biaxial verstreckten Folien nicht benötigt und sollten daher auch nicht verwendet werden. In einer bevorzugten Ausführungsform weist die Folie eine hohe Zugfestigkeit und eine hohe Spannung bei 10 % Dehnung auf. Vorzugsweise ist die Folie so stark verstreckt, dass die Schlagzugzähigkeit quer sehr gering wird. Dies kann für einige Anwendungen wie Aufreißstreifen oder Kartonverschluss nachteilig sein, für Anwendungen wie Verstärkung von Stanzungen an Kartons hat es sich als vorteilhaft herausgestellt. Eine geringe Dehnung durch hohe Verstreckung in Längsrichtung vermeidet das Einreißen von Kartonpappe (zum Beispiel an ausgestanzten Tragegriffen). Derartige Folien neigen zum Auffasern in Längsrichtung, die im Fall einer Kantenbeschädigung das Weiterreißen in Querrichtung durch Umlenkung des Risses in Längsrichtung verhindert.

### Prüfmethoden

- Dicke: DIN 53370
- Zugfestigkeit: DIN 53455-7-5 in Längsrichtung
- Spannung 1 % beziehungsweise 10 % Dehnung: DIN 53455-7-5 in Längsrichtung
- Bruchdehnung: DIN 53455-7-5 in Längsrichtung
- Glanz: DIN 67530, Winkel 60°
- Trübung: ASTM D 1003
- Schlagzugzähigkeit in Querrichtung: DIN EN ISO 8256 (Einspannlänge 10 mm, 7.5J Pendel, 5 Lagen, 30 g Joch)
- Weiterreißfestigkeit in Querrichtung: in Anlehnung an DIN 53363-2003-10, wobei folgende Abweichungen bestehen:
   - Folienbreite 10 mm. Bedingt durch die Einschnitttiefe von 5 mm beträgt die effektive Breite der Probekörper dadurch auch 5 mm
   - Der Winkel der Markierung für die Einspannklemmen zur Folienkante beträgt 75°
   - Zur besseren Differenzierung der Proben bezüglich ihrer Querweiterreißfestigkeit wurde die Prüfgeschwindigkeit von 100 auf 2000 mm/min erhöht. Dadurch war es auch möglich, das Bruchverhalten der Proben anhand des Versagensbildes genauer zu differenzieren.
      Da die hergestellten Muster unterschiedliche Dicke aufweisen, wird die Weiterreißfestigkeit dickennormiert in N/mm² angegeben

### Versagensmerkmale

Die Folien lassen sich bezüglich Ihres Versagensbildes kategorisieren, welches sich ebenfalls als Qualitätskriterium für die Querweiterreißfestigkeit heranziehen lässt:
a) Die Probe reißt einfach in Querrichtung weiter bis zum Bruchversagen des Probekörpers. Dies ist als der ungünstigste Fall für die Beurteilung der Querweiterreißfestigkeit zu bezeichnen.
b) Die Probe reißt zunächst in Längsrichtung weiter bis zum Erreichen der Einspannklemmen, dann reißt die Probe quer zur Prüfrichtung bei Erreichen der Reißfestigkeit. Dieses Rissverhalten ist ein Indiz für hohe Querweiterreißfestigkeit der Folie.
c) Die Probe reißt zunächst in Längsrichtung weiter bis zum Erreichen der Einspannklemmen, dann reißt die Probe unter Spleißen in Längsrichtung bei Erreichen der Reißfestigkeit in viele Einzelfasern, die dann letztendlich in Querrichtung reißen. Dieses Rissverhalten ist ein Indiz für hohe Querweiterreißfestigkeit der Folie, die Weiterreißfestigkeit ist tendenziell etwas höher als bei Versagensart b).

• Schmelzindex: DIN 53735 (PP 230 °C, 2,16 N)
• Biegemodul (Flexural Modulus) ASTM D 790 A
• Klebtechnische Daten: AFERA 4001 entsprechend DIN EN 1939

Im Folgenden soll die Erfindung anhand von Beispielen erläutert werden, ohne diese damit allerdings einschränken zu wollen.

### Beispiele

### Rohstoffe:

Dow 7C06: PP-Blockcopolymer, MFI 1,5 g/10 min, nicht nukleiert, Biegemodul 1280 MPa

### (Dow Chemical)

BA 110 CF: PP-Blockcopolymer, MFI 0,85 g/10 min, nicht nukleiert, Biegemodul 1200 MPa (Borealis)
Moplen HP 501 D: Homopolymer, MFI 0,7 g/10 min, nicht nukleiert, Biegemodul 1450MPa (Basell)
Bormod HD 905: Homopolymer, MFI 6 g/10 min, Biegemodul 2150 MPa (Basell), enthält nach unserer Analyse ein α-Nukleierungsmittel auf Phosphatbasis, wahrscheinlich ADK STAB NA-11 (Adeka Palmarole)
Inspire D 404.01: MFI 3 g/10 min, nukleiert, Biegemodul 2068 MPa (Dow Chemical) nukleiert (mit einem polymeren Nukleierungsmittel entsprechend der US2003195300 A1)
BNX BETAPP-N: β-Nukleierungsmittel in Polypropylen, MFI 4 g/10 min (Mayzo)
Millad ® 3988: 1,3:2,4-Bis(3,4-dimethylbenzylidene) sorbitol (Millad Chemical) [Nukleierungsmittel]
Remafingelb HG AE 30; PP-Farbmasterbatch mit transluzentem Pigment (Clariant Masterbatches)

### Beispiel 1

Die Folie wurde auf einer Einschneckenextrusionsanlage mit Flachdüse mit flexibler Düsenlippe in einer Schicht hergestellt, gefolgt von Chillrollstation und einer einstufigen Kurzspaltreckanlage.
Als Rohstoff wurde Inspire D 404.01 eingesetzt. Die Düsentemperatur betrug 235 °C, Chillroll-Temperaturen and Reckwalzen-Temperaturen wurden so eingestellt, dass die Kristallinität der Folie vor und nach dem Reckvorgang so hoch wie möglich wurde. Das Reckverhältnis betrug 1:10.

| Folieneigenschaften: | |
|---|---|
| Trägerdicke nach Reckung | 70 µm |
| Spannung bei 1 % Dehnung | 71 |
| Spannung bei 10 % Dehnung | - |
| Zugfestigkeit | 317 N/mm² |
| Bruchdehnung | 7 % |
| Weiterreißfestigkeit | 420 N/mm² |
| Versagensmerkmal | 3. |
| Schlagzugzähigkeit quer | 31 mJ/mm² |
| Farbe | glasklar |
| Trübung | 3,5 % |
| Glanz | 145,9 % |

Die Folie wurde beidseitig coronavorbehandelt, auf der Oberseite mit einer 0,5 %igen Lösung von PVSC in Toluol als Release beschichtet und getrocknet. Der Klebstoff wurde aus 42 Gew.-% SIS-Elastomer, 20 Gew.-% Pentaerythritester des hydrierten Kolophoniums, 37 Gew.-% eines C₅-Kohlenwasserstoffharzes mit einem R&B-Wert von 85 °C und 1 Gew.-% Antioxidants Irganox® 1010 in der Schmelze gemischt und bei 150 °C mit einer Düse auf die Folienunterseite aufgetragen. Anschließend wurde das Klebeband zur Mutterrolle gewickelt und zur weiteren Prüfung in 15 mm Breite geschnitten.

| Klebtechnische Daten: | |
|---|---|
| Klebkraft auf Stahl | 2,05 N/cm |
| Abrollkraft bei 0,3 m/min | 0,9 N/cm |
| Masseauftrag | 22 g/m² |

### Beispiel 2

Die Folie wurde anlag zu Beispiel 1 hergestellt. Als Rohstoff wurde Bormod HD 905 eingesetzt.

| Folieneigenschaften: | |
|---|---|
| Versagensmerkmal | 3. |
| Farbe | glasklar |

| | |
|---|---|
| Trübung | 4,5 % |
| Glanz | 132,6 % |

Die Folie wurde einseitig coronavorbehandelt und mit Primal® PS 83 B (Rohm & Hass) beschichtet und getrocknet. Anschließend wurde das Klebeband zur Mutterrolle gewickelt und zur weiteren Prüfung in 15 mm Breite geschnitten.

| Klebtechnische Daten: | |
|---|---|
| Klebkraft auf Stahl | 2,7 N/cm |
| Abrollkraft bei 0,3 m/min | 1 N/cm |
| Masseauftrag | 25 g/m². |

### Beispiel 3

49,5 Gew.-Teile Inspire D 404.01, 49,5 Gew.-Teile Dow 7C06 und 1 Gew.-Teil Remafingelb HG AE 30 wurden gemischt und auf einem Doppelschneckenextruder mit einem Verhältnis L/D von 36 compoundiert. Der resultierende Compound wurde analog Beispiel 1 weiterverarbeitet.

| Folieneigenschaften: | |
|---|---|
| Trägerdicke nach Reckung | 80 µm |
| Versagensmerkmal | b) |
| Farbe | gelb transparent |
| Trübung | 13,8 % |
| Glanz | 102,4 % |

### Vergleichsbeispiel 1

Die Herstellung erfolgte analog Beispiel 3, wobei die Komponenten jedoch nicht vorcompoundiert, sondern dem Folienextruder als Mischung zugeführt wurden.

| Folieneigenschaften: | |
|---|---|
| Trägerdicke nach Reckung | 80 µm |
| Farbe | perlmuttgelb |
| Trübung | 49.8 % |
| Glanz | 28,7 % |

### Vergleichsbeispiel 2

Die Folie wurde anlag zu Beispiel 1 hergestellt, wobei das Reckverhältnis jedoch bei 1:8 eingestellt wurde. Als Rohstoffe wurde eine Mischung aus 98,9 Gew.-Teilen Moplen HP 501 D, 0,9 Gew.-Teilen Remafingelb HG AE 30 und 0,2 Gew.-Teilen BNX BETAPP-N gewählt.

| Folieneigenschaften: | |
|---|---|
| Trägerdicke nach Reckung | 60 µm |
| Versagensmerkmal | b) |
| Schlagzugzähigkeit quer | 150 mJ/mm² |
| Farbe | perlmuttgelb |
| Trübung | 53 % |
| Glanz | 26,1 % |

### Vergleichsbeispiel 3

Eine Folie und ein Klebeband wurden analog Vergleichsbeispiel 1 aus Dow 7C06 mit einem Reckverhältnis von 1:6,1 hergestellt.

| Prüfergebnisse: | |
|---|---|
| Trägerdicke nach Reckung | 80 µm |
| Zugfestigkeit | 247 N/mm² |
| Spannung bei 1 % Dehnung | 19 |
| Spannung bei 10 % Dehnung | 142 N/mm² |
| Bruchdehnung | 27 % |
| Schlagzugzähigkeit quer | 258 mJ/mm² |
| Versagensmerkmal | a) |
| Farbe | farblos, leicht trübe |
| Trübung | 36,9 |
| Glanz | 65,7 |

## Patentansprüche

1. Trägerfolie, die mindestens ein Polypropylen enthält, monoaxial in Längsrichtung verstreckt ist, **dadurch gekennzeichnet, dass** in der Trägerfolie mindestens ein Nukleierungsmittel homogen verteilt ist.

2. Trägerfolie nach Anspruch 1, **dadurch gekennzeichnet, dass** die Trägerfolie eine Trübung von höchstens 30 %, vorzugsweise höchstens 15 % und/oder einen Glanz von mindestens 70 %, vorzugsweise von mindestens 120 % aufweist.

3. Trägerfolie nach Anspruch 1 oder 2, **dadurch gekennzeichnet, dass** die Trägerfolie mit einem Reckverhältnis von mindestens 1:8, vorzugsweise mindestens 1:9,5 in Längsrichtung verstreckt ist.

4. Trägerfolie nach zumindest einem der Ansprüche 1 bis 3, **dadurch gekennzeichnet, dass**
die Trägerfolie eine Zugfestigkeit von mindestens 300, vorzugsweise mindestens 350 N/mm² in Längsrichtung und/oder eine Weiterreißfestigkeit in Querrichtung bezogen auf die Foliendicke von mindestens 450 N/mm²aufweist.

5. Trägerfolie nach zumindest einem der vorherigen Ansprüche, **dadurch gekennzeichnet, dass**
die Trägerfolie in Längsrichtung eine Spannung bei 1 % Dehnung von mindestens 20, vorzugsweise mindestens 40 N/mm² und/oder eine Spannung bei 10 % Dehnung von mindestens 250, vorzugsweise mindestens 300 N/mm² in Längsrichtung aufweist.

6. Trägerfolie nach zumindest einem der vorherigen Ansprüche, **dadurch gekennzeichnet, dass**
die Trägerfolie eine Dicke zwischen 25 und 200, bevorzugt zwischen 40 und 140, besonders bevorzugt zwischen 50 und 90 µm aufweist.

7. Trägerfolie nach zumindest einem der vorherigen Ansprüche, **dadurch gekennzeichnet, dass**
die Trägerfolie einen Polypropylenrohstoff mit einem Schmelzindex von 0,3 bis 15 g/10 min, vorzugsweise 0,8 bis 5 g/10 min und/oder einem Biegemodul von mindestens 1000, vorzugsweise mindestens 1500 und insbesondere mindestens 2000 MPa enthält.

8. Trägerfolie nach zumindest einem der vorherigen Ansprüche, **dadurch gekennzeichnet, dass**
das Polypropylen überwiegend isotaktisch aufgebaut ist.

9. Trägerfolie nach zumindest einem der vorherigen Ansprüche, **dadurch gekennzeichnet, dass**
die Trägerfolie aus einer Mischung aus einem nukleierten und einem nicht nukleierten Polypropylen besteht.

10. Trägerfolie nach zumindest einem der vorherigen Ansprüche, **dadurch gekennzeichnet, dass**
das Nukleierungsmittel ein organisches Nukleierungsmittel ist, vorzugsweise ein Benzoat, Phosphat, Sorbitolderivat, oder das Nukleierungsmittel ein semikristallines verzweigtes oder gekuppeltes polymeres Nukleierungsmittel ist.

11. Verfahren zur Herstellung einer Trägerfolie nach zumindest einem der vorherigen Ansprüche mit folgenden Schritten:
• Polymere und Additive werden gemischt und in einem Extruder einer Flachfoliendüse zugeführt, wobei der Extruder das Nukleierungsmittel homogen mit dem Polypropylen vermischt
• Der Schmelzefilm wird dann auf einer so genannten "Chillroll" kontrolliert abgekühlt
• Bevor die Folie dem Reckwerk zugeführt wird, wird sie über temperierte Walzen auf eine geeignete Recktemperatur aufgeheizt
• Die Folie wird im Kurzspalt in Maschinenrichtung orientiert

12. Verfahren nach Anspruch 11, **dadurch gekennzeichnet, dass** die Chillroll eine Temperatur von 30 bis 60 °C aufweist.

13. Verwendung einer Trägerfolie nach zumindest einem der vorherigen Ansprüche in einem ein- oder beidseitig klebenden Klebeband.

14. Verwendung einer Trägerfolie nach zumindest einem der vorherigen Ansprüche in einem Klebeband zur Verstärkung von Kartonagen, insbesondere vorzugsweise im Bereich von Stanzungen.
